# EUROPEAN PATENT APPLICATION

(11) **EP 4 676 098 A1**
(43) Date of publication of application: **07.01.2026**
(21) Application number: 25182755.6
(22) Date of filing: 13.06.2025
(51) Int. Cl.: H04W 4/021, G06N 3/045, G06Q 10/04

(54) **SYSTEM AND METHOD FOR PREDICTING ENVIRONMENT**

(30) Priority: 04.07.2024 JP 2024108265
(71) Applicant: Hitachi, Ltd., Tokyo 100-8280 (JP)
(72) Inventor: NAKAMURA, Keigo, Tokyo, 1008280 (JP); NISHIDE, Akinori, Tokyo, 1008280 (JP); WATANABE, Koichi, Tokyo, 1008280 (JP)
(74) Representative: MERH-IP Matias Erny Reichl Hoffmann Patentanwälte PartG mbB

(57) **Abstract**

An environment prediction system for predicting an environmental indicator in a predetermined position and/or region includes: an information input unit configured to acquire, as input information, at least two or more types of information from among image information, numerical information, or text information each including geographical position information; an information estimation unit including at least a position information acquisition unit configured to separate or estimate the position information from the input information, a position information processing unit configured to encode the separated or estimated position information and generate a plurality of position information embedded expressions, an input information encoding unit configured to encode the acquired input information for each piece of information and generate a plurality of input information embedded expressions, and an information integration processing unit configured to embed the position information embedded expressions into the plurality of input information embedded expressions respectively to generate a plurality of integrated embedded expressions, the information estimation unit configured to predict the environmental indicator in the predetermined position and/or region by inputting the plurality of integrated embedded expressions to a trained environmental indicator prediction model; and an information output unit configured to output the predicted environmental indicator.

## Description

### BACKGROUND OF THE INVENTION

### 1. Field of the Invention

The present invention relates to a computer technique for predicting environmental fluctuations.

### 2. Description of Related Art

In recent years, with the full-scale implementation of the Taskforce on Nature-related Financial Disclosures (TNFD), there has been an increasing demand, particularly in the industrial sector, for visualizing the influence of corporate activities on the environment and predicting future fluctuations in environmental indicators. Under such circumstances, technology that uses machine learning to predict future fluctuations in environmental indicators is expected to be one of the leading technologies to meet such demand.

It is known that a prediction technique using machine learning improves the prediction accuracy by performing future prediction based on a plurality of types of input information compared to a case of performing future prediction based on a single type of input information (for example, PTLs 1 and 2) .

### Citation List

### Patent Literature

PTL 1: JP2021-136019A
PTL 2: JP2022-175160A

### SUMMARY OF THE INVENTION

In the related art, when the future prediction is performed based on a plurality of types of input information, the importance of the input information is evaluated assuming that information having the same content has the same importance. However, in the real environment or ecosystem, even when the event having the same content occurs, the degree of influence changes depending on a distance from an observation location.

Since an influence of an event far from the observation location is also received, it is necessary to perform future prediction in consideration of an influence of an event outside an observation range.

Since a plurality of events are associated with each other to affect the natural environment, it is necessary to consider the interrelationships between the events based on a positional relationship thereof, but no technology has yet been disclosed that fully satisfies this need, and the development of new technology has been awaited.

The invention has been made in view of the problems described above, and an object thereof is to provide a technique capable of predicting an environmental indicator in consideration of a magnitude of a degree of influence based on a positional relationship between pieces of information when future prediction of a target environment is performed based on multimodal information generated by machine learning.

According to the invention, an environment prediction system for predicting an environmental indicator in a predetermined position and/or region includes: an information input unit configured to acquire, as input information, at least two or more types of information from among image information, numerical information, or text information each including geographical position information; an information estimation unit including at least a position information acquisition unit configured to separate or estimate the position information from the input information, a position information processing unit configured to encode the separated or estimated position information and generate a plurality of position information embedded expressions, an input information encoding unit configured to encode the acquired input information for each piece of information and generate a plurality of input information embedded expressions, and an information integration processing unit configured to embed the position information embedded expressions into the plurality of input information embedded expressions respectively to generate a plurality of integrated embedded expressions, the information estimation unit configured to predict the environmental indicator in the predetermined position and/or region by inputting the plurality of integrated embedded expressions to a trained environmental indicator prediction model; and an information output unit configured to output the predicted environmental indicator.

In addition, other problems disclosed by the present application and methods for solving the problems will be made clear in the section of the description of embodiments and the drawings.

According to the invention, when future prediction of a target environment is performed based on multimodal information generated by machine learning, it is possible to predict an environmental indicator in consideration of a magnitude of a degree of influence based on a positional relationship between pieces of information.

### BRIEF DESCRIPTION OF THE DRAWINGS

FIG. 1 is a diagram illustrating an example of a hardware structure of an environment prediction system;
FIG. 2 is a diagram illustrating an example of functional blocks of the environment prediction system;
FIG. 3 is a diagram illustrating an example of a configuration of an environmental indicator prediction model according to Embodiment 1;
FIG. 4 is a diagram illustrating an example of a data flow in environment prediction processing according to Embodiment 1;
FIG. 5 is a diagram illustrating an example of a two-dimensional position encoder;
FIG. 6 is a diagram illustrating an example of an input interface;
FIG. 7 is a diagram illustrating an example of a prediction scenario input interface;
FIG. 8 is a diagram illustrating an example of an output interface;
FIG. 9 is a diagram illustrating an example of a GUI display screen on which output information is displayed when a geographical absolute position encoder is used;
FIG. 10 is a diagram illustrating a case of adding height information and predicting an influence of a spatial event;
FIG. 11 is a diagram illustrating a case in which time information is added to support prediction of a temporal change;
FIG. 12 is a diagram illustrating an example of a configuration of an environmental indicator prediction model according to Embodiment 2;
FIG. 13 is a diagram illustrating a correction term for attention based on a relative positional relationship; and
FIG. 14 is a diagram illustrating an example of a GUI display screen on which output information is displayed when a geographical relative position encoder is used.

### DESCRIPTION OF EMBODIMENTS

In the following description, an "interface device" may be one or more interface devices. One or more interface devices may be at least one of the following.
·One or more input/output (I/O) interface devices. The input/output (I/O) interface device is an interface device for at least one of an I/O device and a remote display computer. The I/O interface device for the display computer may be a communication interface device. At least one I/O device may be a user interface device, such as either an input interface device such as a keyboard or a pointing device or an output interface device such as a display device.
·One or more communication interface devices. The one or more communication interface devices may be one or more communication interface devices of the same type (for example, one or more network interface cards (NICs)), or may be two or more communication interface devices of different types (for example, an NIC and a host bus adapter (HBA)).

In the following description, a "memory" is one or more memory devices serving as an example of one or more storage devices, and may be typically a main storage device. At least one memory device in the memory may be a volatile memory device or a non-volatile memory device.

In the following description, an "auxiliary storage device" may be one or more auxiliary storage devices serving as an example of one or more storage devices. The auxiliary storage device is typically a non-volatile storage device (for example, a persistent storage device), and specifically may be, for example, a hard disk drive (HDD), a solid state drive (SSD), a non-volatile memory express (NVME) drive, or a storage class memory (SCM).

In the following description, a "storage device" may be one or both of the memory and the auxiliary storage device.

In the following description, a "processor" may be one or more processor devices. At least one processor device may typically be a microprocessor device such as a central processing unit (CPU), may include another type of processor device such as a graphics processing unit (GPU), or may be another type of processor device. At least one processor device may be a single core or a multi-core. At least one processor device may be a processor core. At least one processor device may be a processor device in a broad sense, such as a circuit (for example, a field-programmable gate array (FPGA), a complex programmable logic device (CPLD), or an application specific integrated circuit (ASIC)), which is an aggregate of gate arrays, in a hardware description language in which a part or all processing is executed.

In the following description, functions may be described by an expression of "xxx unit", but the functions may be implemented by one or more computer programs (hereinafter, also simply referred to as "programs") being executed by a processor, may be implemented by one or more hardware circuits (for example, an FPGA or an ASIC), or may be implemented by a combination thereof. When the functions are implemented by executing a program by a processor, the functions may be at least a part of the processor as specified processing is executed using a storage device and/or an interface device as appropriate. Processing described with a function as a subject may be processing executed by a processor or a device including the processor. The program may be installed from a program source. The program source may be, for example, a program distribution computer or a computer-readable recording medium (for example, a non-transitory recording medium). Description of the function is an example. A plurality of functions may be integrated into one function, or one function may be divided into a plurality of functions.

In the following explanation, an expression such as "yyy database" and "yyy table" may be used to describe information that gives an output for an input. However, the information may be a table of any data structure, or may be a learning model such as a neural network that generates an output for an input, a genetic algorithm, or a random forest. That is, to indicate that the information does not depend on the data structure, "yyy database" and "yyy table" can be expressed as "yyy information". In the following description, a configuration of each table is an example, and one table may be divided into two or more tables, or all or a part of two or more tables may be one table.

In the following description, processing may be described using the "program" as a subject. The processing described with the program as the subject may be processing executed by a processor or a device including the processor. Two or more programs may be implemented as one program, or one program may be implemented as two or more programs.

In the following description, an "environment prediction system" may be a system (for example, an on-premise system) implemented by one or more physical computers, or may be a system (for example, a cloud computing system) implemented on a group of physical computing resources (for example, a cloud infrastructure). The environment prediction system "displaying" display information may mean that the display information is displayed on a display device (such as an output device to be described later) possessed by a computer, or may mean that the computer transmits the display information to a display computer (via a communication device to be described later) (in the latter case, the display information is displayed by the display computer).

Hereinafter, various embodiments will be described in detail with reference to the drawings.

In the following description, the same or similar components are denoted by the same reference signs, and redundant descriptions thereof may be omitted.

When there are a plurality of elements having the same or similar functions, the plurality of elements may be described by using the same reference signs with different suffixes to distinguish the plurality of elements. On the other hand, when there is no need to distinguish the plurality of elements, the suffixes may be omitted.

### Embodiment 1

### Configuration Example of Environment Prediction System 100

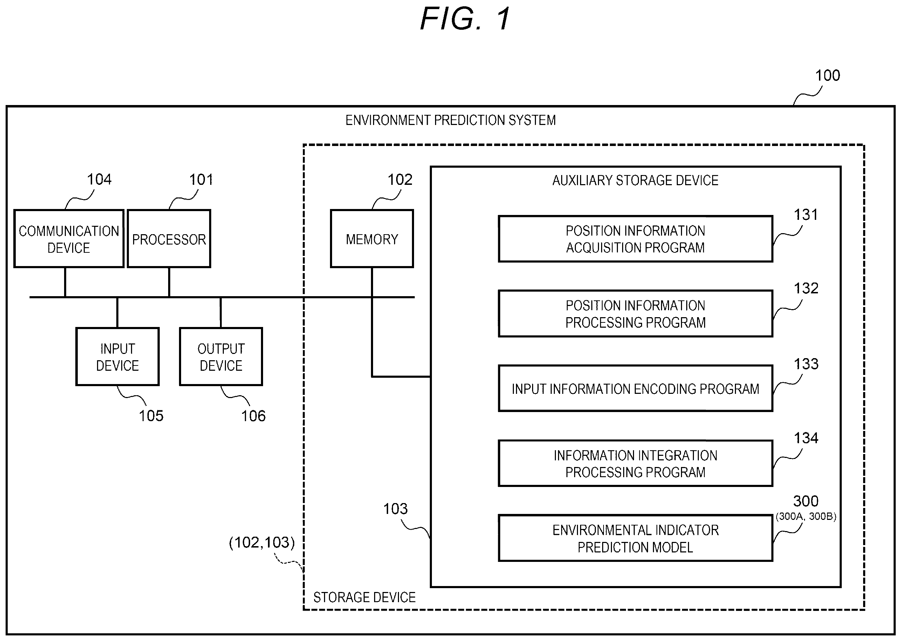

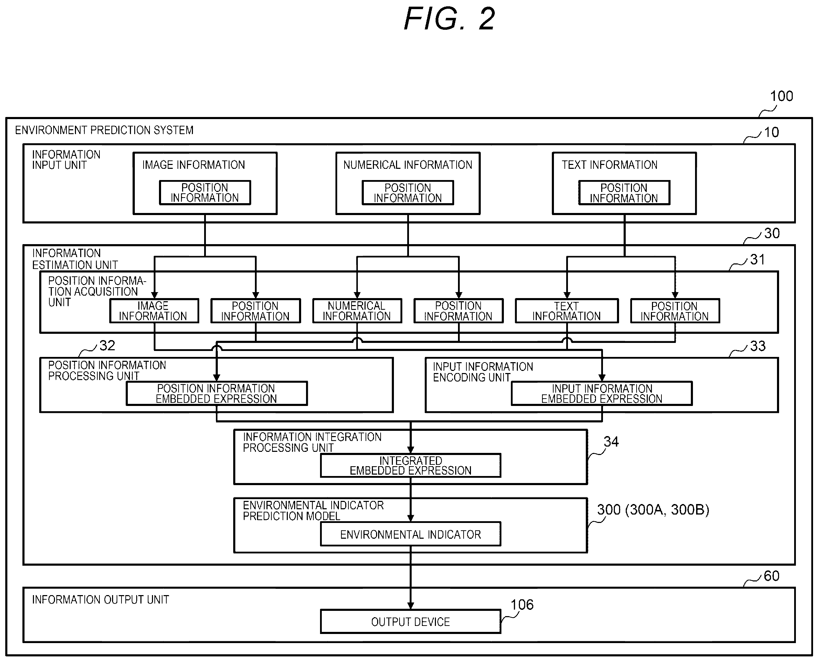

First, a configuration example of an environment prediction system 100 according to Embodiment 1 and Embodiment 2 to be described later will be described with reference to FIGS. 1 and 2.

FIG. 1 is a diagram illustrating an example of a hardware structure of the environment prediction system 100 according to Embodiments 1 and 2. FIG. 2 is a diagram illustrating an example of functional blocks of the environment prediction system 100 according to Embodiments 1 and 2.

### Configuration Example of Entire System

The environment prediction system 100 according to Embodiments 1 and 2 is a computer system capable of predicting an environmental indicator in a predetermined position and/or region in consideration of a magnitude of a degree of influence based on a positional relationship between pieces of information when the future prediction of a target environment is performed based on multimodal information generated by machine learning, and is implemented by a computer device or server device including configurations to be described later.

Various computer devices or server devices (not illustrated) that include various databases that store data related to public news, weather, topography, and satellites, as acquisition destinations of various input information such as image information, numerical information, and text information and that distribute these pieces of information are connected to the environment prediction system 100 via an appropriate communication network (hereinafter, also simply referred to as a "network") such as the Internet or a dedicated line to enable data communication. In addition, various simulation servers (not illustrated) that execute processing such as simulation and AI analysis using these pieces of data are also connected to the environment prediction system 100 via a network to enable data communication. The environment prediction system 100 acquires data indicating various types of input information to be used for processing to be described later from such various computer devices or server devices. Such various computer devices or server devices and the network are connected via a well-known communication device (not illustrated) by wires, but may be connected wirelessly.

User terminals (not illustrated) such as laptop PCs, tablets, and smartphones owned by users of the environment prediction system 100 are connected to the environment prediction system 100 via a network to enable data communication with one another. The environment prediction system 100 and the network are connected via a well-known communication device (not illustrated) by wires, and may be connected wirelessly. The user terminals and the network are connected wirelessly, and may be connected by wires. A unique ID called a user ID is assigned in advance to each user of the environment prediction system 100, who owns the user terminal.

Other devices or systems may be connected to the environment prediction system 100 via a network to enable data communication with one another. In this case, other devices or systems and the network may be connected via a well-known communication device (not illustrated) by wires, or may be connected wirelessly. The environment prediction system 100 may acquire, for example, various types of data to be used for processing to be described later from still another device or system.

In the following description of the present embodiment, other devices or terminals such as the user terminal and various computer devices and/or server devices that control other systems such as company's internal systems, which are connected to the environment prediction system 100, may be simply referred to as "other devices" or "other terminals".

In the present embodiment, as illustrated in FIGS. 1 and 2, the environment prediction system 100 is described as including one device. However, for example, the environment prediction system 100 may include a plurality of devices.

In the present embodiment, the environment prediction system 100 and various other devices such as a user terminal and other devices are described as being separate devices. However, the environment prediction system 100 and other various devices may be implemented by the same device. That is, in this case, the environment prediction system 100 may be implemented in a shape of including a part or all of the functions of the various devices.

### Hardware Structure Example of Environment Prediction System 100

Next, an example of a hardware structure of the environment prediction system 100 will be described with reference to FIG. 1.

As illustrated in FIG. 1, the environment prediction system 100 is implemented by a computer including at least a storage device including a memory 102 and an auxiliary storage device 103, an interface device including at least a communication device 104, and a processor 101 connected thereto. In the environment prediction system 100, the interface device may include an input device 105 and/or an output device 106.

In the following description, the environment prediction system 100 is implemented by one general-purpose computer device including one or more processors 101, one or more memories 102, one or more auxiliary storage devices 103, one or more communication devices 104, one or more input devices 105, one or more output devices 106, and a wired or wireless communication line that connects these devices.

The auxiliary storage device 103 is an auxiliary storage device including a non-volatile storage element such as a flash memory. Specific examples of the auxiliary storage device 103 include a solid state drive (SSD) and a hard disk drive (HDD). The auxiliary storage device 103 stores at least various programs including a position information acquisition program 131, a position information processing program 132, an input information encoding program 133, and an information integration processing program 134, and an environmental indicator prediction model 300. These programs (131, 132, 133, and 134) are computer programs for implementing functions required for the environment prediction system 100.

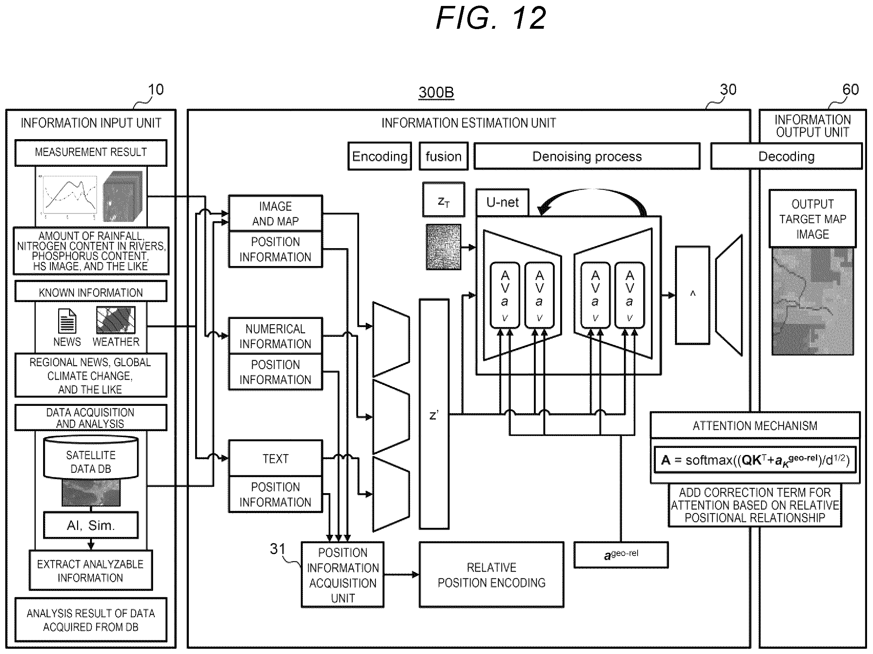

That is, when the programs (131, 132, 133, and 134) described above are executed by the processor 101, the functions of the functional units included in the environment prediction system 100, such as a position information acquisition unit 31, a position information processing unit 32, an input information encoding unit 33, and an information integration processing unit 34 to be described later, are implemented. In other words, the programs (131, 132, 133, and 134) described above are executed by the processor 101, thereby executing various types of processing to be described later in relation to FIGS. 2 to 4 (and FIG. 12).

The programs (131, 132, 133, and 134) described above are provided to the environment prediction system 100 via various removable media such as a CD-ROM or a flash memory or via a network, and are stored in the non-volatile auxiliary storage device 103, which is a non-transitory storage medium. Therefore, the environment prediction system 100 may include an interface for reading data from the removable media.

The programs (131, 132, 133, and 134) described above may be installed from a program source. The program source may be, for example, a program distribution computer or a computer-readable recording medium. The programs (131, 132, 133, and 134) described above may be implemented by a device driver, an operating system, various application programs located at a higher layer of the device driver and the operating system, or a library that provides a common function to these programs. Two or more programs may be implemented as one program, or one program may be implemented as two or more programs.

The memory 102 is a main storage device mainly including a volatile storage element such as a random access memory (RAM). The memory 102 includes a ROM including a non-volatile storage element. The ROM stores a fixed program (for example, BIOS). The memory 102 temporarily stores data indicating various types of information read from the auxiliary storage device 103 and various types of data acquired via the communication device 104 and/or the input device 105.

The processor 101 is a processor device such as a central processing unit (CPU) and various co-processors. The processor 101 calls various computer programs including an environment-related data management program to the memory 102 and executes the computer programs, thereby performing overall control of the environment prediction system 100 itself and controlling a control unit (not illustrated) that performs various types of processing such as arithmetic processing and determination processing.

The interface device includes a communication device 104 that controls a communication unit (not illustrated) to be described later, the input device 105 that controls an input unit (not illustrated) to be described later, and the output device 106 that controls an information output unit 60 to be described later.

The communication device 104 is a network interface device that controls communication with other devices according to a predetermined protocol.

The input device 105 refers to various input interface devices for receiving an input operation from a user of the environment prediction system 100, such as a keyboard, a mouse, or a touch panel.

The output device 106 refers to various output interface devices for outputting a processing result to the user of the environment prediction system 100 in a recognizable form, such as various display devices such as a liquid crystal display or a touch screen.

The environment prediction system 100 may be implemented by an independent device or may be implemented by an embedded device.

### Example of Functional Blocks of Environment Prediction System 100

Next, an example of various functional blocks included in the environment prediction system 100 will be described with reference to FIG. 2. Each block to be described below does not represent a hardware unit configuration but represents a functional unit block.

The environment prediction system 100 mainly includes functional blocks including a control unit (not illustrated) implemented by the processor 101, a storage unit (not illustrated) implemented by the storage device (202, 203), a communication unit (not illustrated) implemented by the communication device 104, and a user interface unit (not illustrated) implemented by the input device 105 and/or the output device 106.

The control unit executes various types of data processing based on programs and data stored in the storage unit and data acquired from the communication unit. The control unit also functions as an interface to the storage unit and the communication unit.

As illustrated in FIG. 2, the control unit includes an information estimation unit 30 as the functional block.

The information estimation unit 30 executes at least processing of predicting an environmental indicator of a predetermined position and/or region by inputting a plurality of integrated embedded expressions generated by the input information encoding unit 33 to the trained environmental indicator prediction model 300.

As illustrated in FIG. 2, the information estimation unit 30 includes functional blocks of the position information acquisition unit 31, the position information processing unit 32, the input information encoding unit 33, and the information integration processing unit 34.

The position information acquisition unit 31 executes at least processing of separating or estimating position information from various types of input information.

The position information processing unit 32 executes at least processing of encoding the position information separated or estimated by the position information acquisition unit 31 and generating a plurality of position information embedded expressions.

The input information encoding unit 33 executes at least processing of encoding various types of input information from which the position information is separated for each piece of information to generate a plurality of input information embedded expressions.

The information integration processing unit 34 executes at least processing of embedding the corresponding position information embedded expression in each of the plurality of input information embedded expressions generated by the input information encoding unit 33 and generating a plurality of integrated embedded expressions.

The control unit is implemented by the processor 101, and can implement these functional blocks by executing various programs including the position information acquisition program 131, the position information processing program 132, the input information encoding program 133, and the information integration processing program 134. Instead of the processor 101, the control unit may be implemented using a logic circuit such as a field-programmable gate array (FPGA) or an application specific integrated circuit (ASIC). The control unit may be implemented by a combination of the processor 101 and a logic circuit.

The storage unit is implemented using, for example, a storage device (102, 103) including the memory 102 and the auxiliary storage device 103, and stores programs for supplying various processing instructions to the control unit and data indicating various types of information used in processing executed by the control unit.

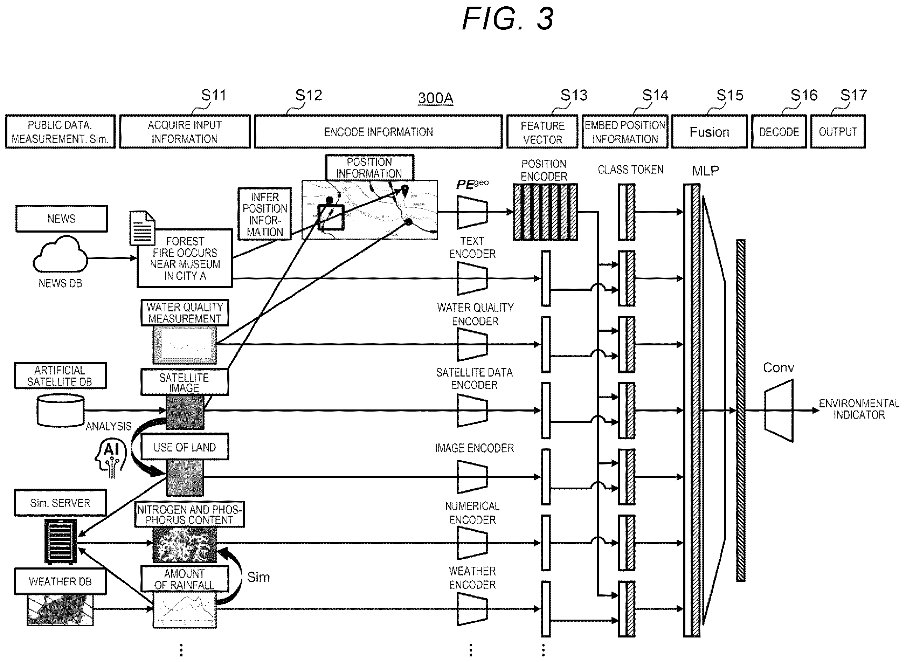

The storage unit stores at least the environmental indicator prediction model 300. Details of the environmental indicator prediction model 300 will be described later with reference to FIGS. 3 and 12.

The control unit can execute various types of processing including environment prediction processing to be described later by reading and writing data indicating various types of information about the environmental indicator prediction model 300 from and to the storage unit.

The communication unit executes communication processing with the user terminal, other devices, and the like via a network. The communication unit is implemented using, for example, a network interface card (NIC) or a host bus adapter (HBA).

The communication unit includes an information input unit 10 as the functional block.

The information input unit 10 executes at least processing of acquiring, as the input information, at least two types or more of information among image information, numerical information, and text information each including geographical position information.

The user interface unit includes functional blocks of the input unit (not illustrated) and the information output unit 60.

The input unit executes processing related to input, such as reception of the input operation from the user, among processing related to the user interface. The input unit is implemented using, for example, the input device 105 such as a keyboard, a mouse, or a touch panel, and detects various operations from the user.

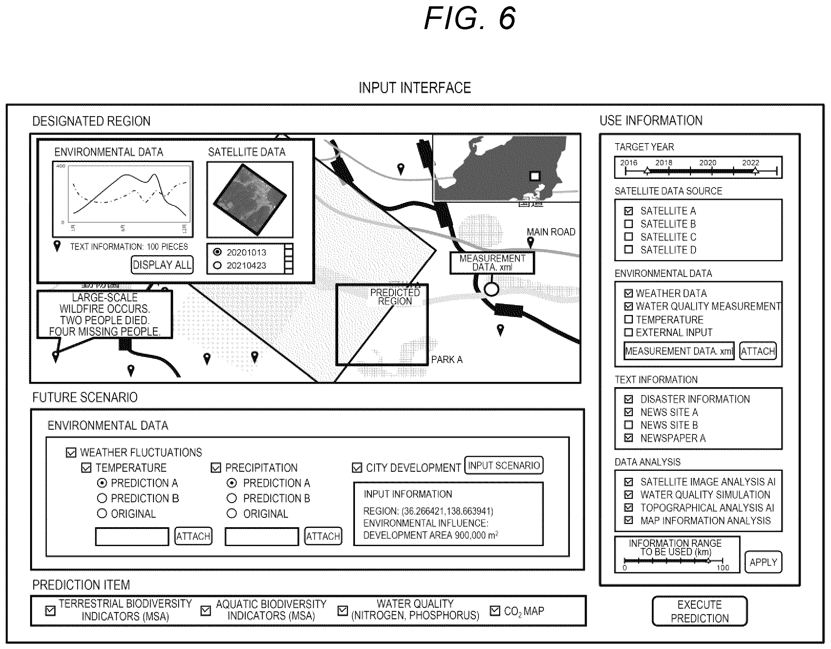

The information output unit 60 executes processing related to output, such as display of various screens on the output device 106 and an audio output, among the processing related to the user interface. For example, the information output unit 60 displays a GUI display screen (details will be described later with reference to FIGS. 6 to 9 and 14) related to the environment prediction processing on the output device 106. The information output unit 60 executes at least processing of outputting an environmental indicator predicted by the information estimation unit 30. The information output unit 60 includes various output devices 106 such as a liquid crystal display and a touch screen.

For example, when remote login to the environment prediction system 100 is performed from another external device such as a user terminal, or when the input information is received from the external device or the output information is provided to the external device via the communication device 104, it is not essential to mount the input unit and/or the information output unit 60 configured as described above. In this case, the environment prediction system 100 may receive access from the external device according to a predetermined protocol by having a function of a web server. In this case, the information output unit 60 may be configured as a functional unit that provides various types of output information to another external device such as a user terminal via the communication device 104.

That is, components of the environment prediction system 100 are implemented by hardware including the processor 101, the storage device such as the memory 102 and the auxiliary storage device 103, and the wired or wireless communication line or the interface device (104, 105, and 106) that connects these devices, and software that is stored in the storage device (102, 103) and supplies the processing instruction to a computing unit (the processor 101).

In the description described above related to the functions of the environment prediction system 100, the functions of the environment prediction system 100 are implemented integrally by one computer device. However, the functions may be implemented by a plurality of interconnected computer devices and/or server devices. The environment prediction system 100 may include a general-purpose computer device such as a laptop PC and a web browser installed in the general-purpose computer device, or may include a web server and various types of portable devices.

The environment prediction system 100 is a computer system implemented on one physical computer or a plurality of computers implemented logically or physically, and may operate on a virtual computer constructed on a plurality of physical computer resources. For example, the functional units such as the position information acquisition unit 31, the position information processing unit 32, the input information encoding unit 33, and the information integration processing unit 34 may operate on separate physical or logical computers, or may operate on one physical or logical computer by combining a plurality of functional units.

The description of the functions described above is an example. A plurality of functions may be integrated into one function, and one function may be divided into a plurality of functions.

In addition to the functions described above, the environment prediction system 100 may further include another function. For example, as described above, the environment prediction system 100 may include a part of the various functions included in the user terminal.

### Operation Example of Environment Prediction System 100

Next, an operation example of the environment prediction system 100 according to Embodiment 1 will be described with reference to FIGS. 2 to 4.

### Environment Prediction Processing

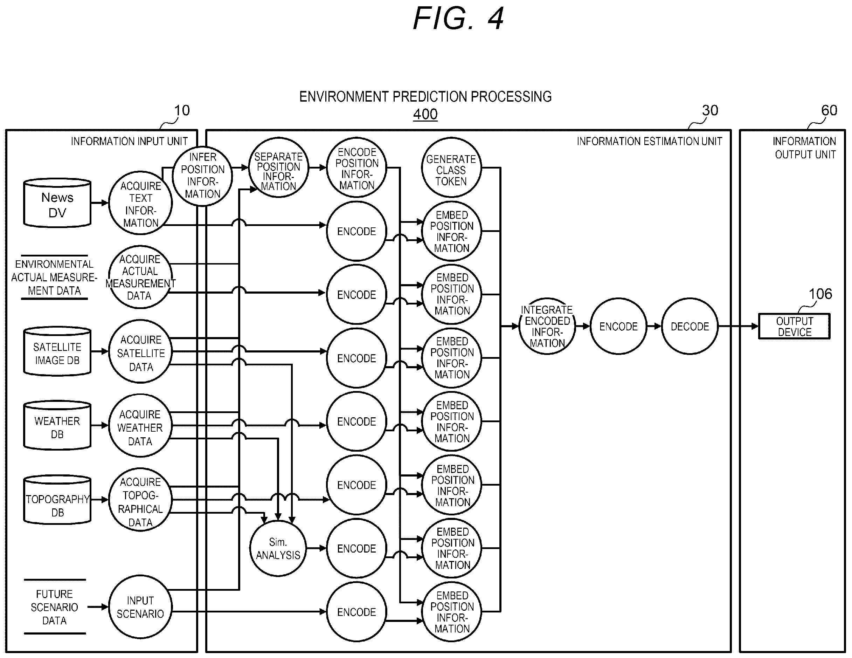

FIG. 3 is a diagram illustrating an example of a configuration of an environmental indicator prediction model 300A according to Embodiment 1 together with an example of a flow of environment prediction processing executed by the environment prediction system 100 according to Embodiment 1 based on the environmental indicator prediction model 300A. FIG. 4 is a diagram 400 illustrating an example of a data flow in the environment prediction processing.

As described above, the environment prediction processing illustrated in FIGS. 2 to 4 is processing mainly executed by the information estimation unit 30 in the environment prediction system 100 according to Embodiment 1.

In step S11, the control unit of the environment prediction system 100 causes the information input unit 10 to execute processing of acquiring various types of input information such as image information, numerical information, and text information. Examples of data sources serving as acquisition destinations for these pieces of input information include various databases that store data related to public news, weather, topography, and satellites as illustrated in FIGS. 3 and 4. In addition, for example, results of processing such as simulation or AI analysis executed using these pieces of data in a simulation server (hereinafter also referred to as a "Sim. server") can also be acquired as the input information. Accordingly, various types of input information such as image information, numerical information, and text information are acquired. When the processing in step S11 is completed, the control unit of the environment prediction system 100 proceeds to step S12.

In step S12, the control unit of the environment prediction system 100 causes the position information acquisition unit 31 to execute processing of separating the position information from various types of input information such as the image information, the numerical information, and the text information acquired in step S11, and then causes the input information encoding unit 33 to execute processing of encoding the various types of input information from which the position information is separated. A machine learning model for extracting embedded expressions from these pieces of information is provided for each piece of information, and accordingly, the information becomes an embedded expression. Accordingly, the various types of input information from which the position information is separated are encoded. When the processing in step S12 is completed, the control unit of the environment prediction system 100 proceeds to step S13.

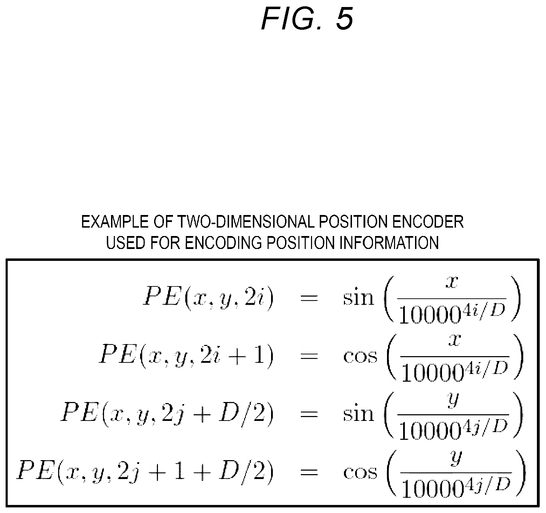

In step S13, the control unit of the environment prediction system 100 causes the input information encoding unit 33 to execute processing of encoding each piece of position information separated from the various pieces of input information in step S12. The encoding of each piece of position information is performed using, for example, a two-dimensional position encoder illustrated in FIG. 5. Accordingly, each piece of position information separated from the various types of input information in step S12 is encoded. When the processing in step S13 is completed, the control unit of the environment prediction system 100 proceeds to step S14.

In step S14, the control unit of the environment prediction system 100 causes the position information processing unit 32 to execute processing of embedding each piece of position information encoded in step S13 in each of various pieces of input information encoded in step S12. When embedding the position information, the position information processing unit 32 generates a class token to be used for decoding to be executed in step S16. Accordingly, the position information encoded in step S13 is embedded in each piece of the various types of input information encoded in step S12, thereby obtaining the position information embedded expressions. When the processing in step S14 is completed, the control unit of the environment prediction system 100 proceeds to step S15.

In step S15, the control unit of the environment prediction system 100 causes the information integration processing unit 34 to execute processing of integrating (fusing) various types of input information in which the encoded position information is embedded in step S14 and the position information embedded expression is obtained to acquire the integrated embedded expression. The processing is performed using, for example, MLP. Thereafter, an environment-embedded expression is obtained through a further trained machine learning model. Accordingly, the various types of input information in which the encoded position information is embedded and the position information embedded expression is obtained are integrated to obtain the integrated embedded expression, thereby obtaining the environment-embedded expression. When the processing in step S15 is completed, the control unit of the environment prediction system 100 proceeds to step S16.

In step S16, the control unit of the environment prediction system 100 causes the information estimation unit 30 to execute processing of decoding the environment-embedded expression obtained in step S15 using the class token generated in step S14. Accordingly, the environment-embedded expression obtained in step S15 is decoded using the class token generated in step S14. As a result, the user of the environment prediction system 100 can acquire a desired environmental indicator. In this way, the output information is obtained from a class token matrix. When the processing in step S16 is completed, the control unit of the environment prediction system 100 proceeds to step S17.

In step S17, the control unit of the environment prediction system 100 causes the information output unit 60 to execute processing of outputting the output information obtained as a result of the processing of steps S11 to S16 by displaying the output information on, for example, the GUI display screen of the environment prediction system 100. The information output unit 60 may display, for example, the GUI display screen (details will be described later with reference to FIGS. 6 to 9) of the environment prediction system 100 including the output information on a screen of the output device 106, or may display the GUI display screen on a screen of another external device such as a user terminal via the communication device 104. The output information may be output in another output format such as a voice. Accordingly, the output information is output. When the processing in step S17 is completed, the control unit of the environment prediction system 100 ends the environment prediction processing illustrated in FIGS. 2 to 4.

Factors that affect the environmental indicator, such as a biodiversity map, are usually present discretely in a plurality of types (modals) of data formats. Therefore, according to the environment prediction system 100 according to Embodiment 1, as described above, by embedding information indicating an absolute position (hereinafter, also referred to as "absolute position information") in the multimodal information, it is possible to perform the future prediction of the environmental indicator by incorporating the magnitude of the degree of influence based on the positional relationship between pieces of information.

### Display Screen Example

Next, various display screen examples of the environment prediction system 100 according to Embodiment 1 will be described with reference to FIGS. 6 to 9.

### Input Interface

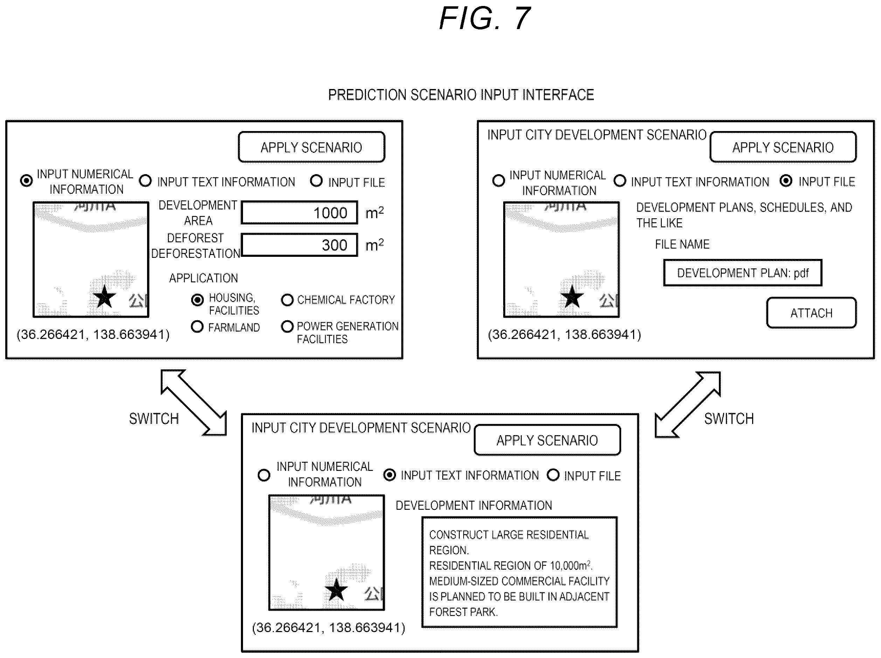

FIG. 6 is a diagram illustrating an example of an input interface screen of the environment prediction system 100. FIG. 7 is a diagram illustrating a prediction scenario input interface screen of the environment prediction system 100.

When the input information is acquired, the user of the environment prediction system 100 performs an input operation of designating a range of target years in which the input information is acquired, a target data source from which the input information is acquired, a prediction item indicating an environmental indicator for performing prediction, and the like via the input interface screen illustrated in FIG. 6. At this time, as illustrated in FIG. 6, the user of the environment prediction system 100 can designate information to be acquired by performing various data analyses such as analysis using AI or simulation. As illustrated in FIG. 7, the user of the environment prediction system 100 can perform future prediction by designating or inputting a future prediction scenario. When the control unit of the environment prediction system 100 acquires a content of the input operation via the communication unit, the control unit acquires various types of input information according to the content and executes the environment prediction processing.

### Output Interface

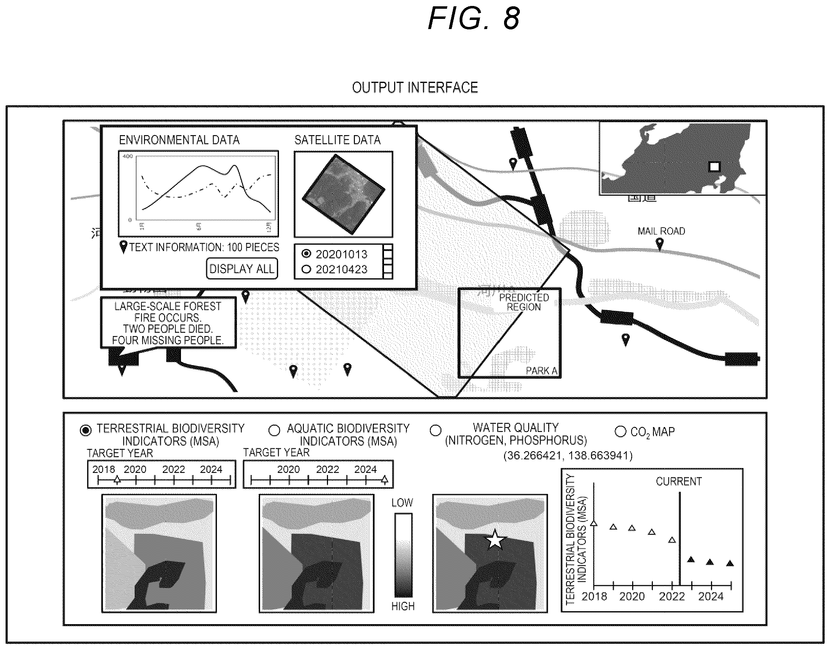

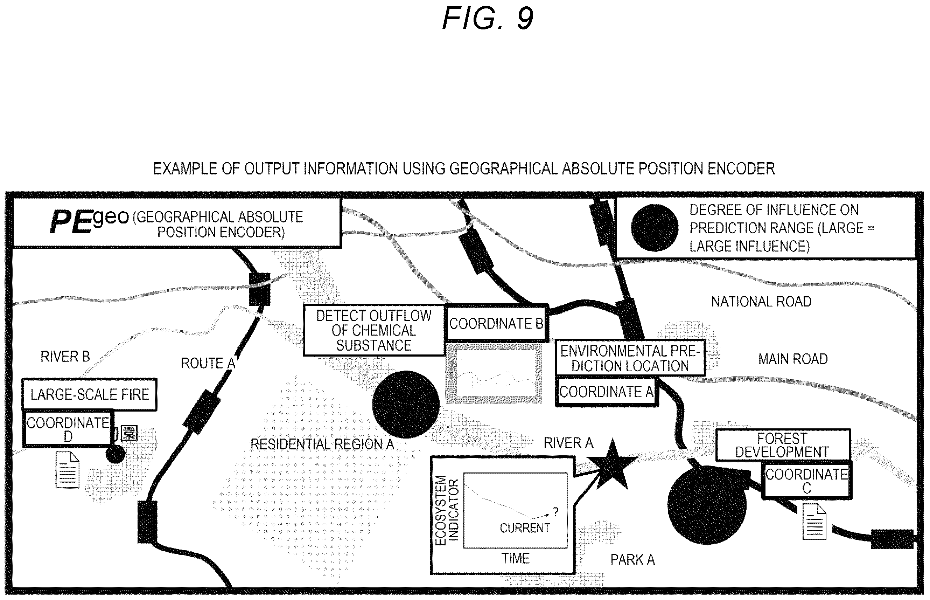

FIG. 8 is a diagram illustrating an example of an output interface screen of the environment prediction system 100. FIG. 9 is a diagram illustrating an example of a display screen on which output information is displayed when a geographical absolute position encoder is used.

As described above, when the control unit of the environment prediction system 100 executes the environment prediction processing according to the content of the input operation received from the user via the input interface screen illustrated in FIGS. 6 and 7, the control unit causes the information output unit 60 to display output information obtained as a result of the environment prediction processing on the output interface screen of the environment prediction system 100 illustrated in FIG. 8. A position of the used information and a predicted region are displayed on the output interface screen illustrated in FIG. 8. The environment prediction system 100 can display each prediction region and an environment prediction result at each location on the output interface screen illustrated in FIG. 8.

When the user designates a prediction target year via the input interface screen illustrated in FIG. 6, the information about the target year can be displayed on the output interface screen as illustrated in FIG. 8 in the environment prediction system 100.

The control unit of the environment prediction system 100 can also display fluctuations in the environmental indicator at a certain location or a state of fluctuations in a map on the output interface screen by moving images.

As described above, in the environment prediction processing, the control unit of the environment prediction system 100 according to Embodiment 1 executes processing of encoding the position information separated from the multimodal input information and embedding the encoded position information in the multimodal input information from which the position information is separated and that is separately encoded, using the geographical absolute position encoder. In this case, for example, the output information obtained as a result of the environment prediction processing is displayed on the output interface screen as illustrated in FIG. 9. In the display screen illustrated in FIG. 9, in a geographical space such as a map, a display content reflects that the multimodal information affects the environmental indicators at a predicted location. In this case, in addition to the magnitude of the degree of influence of the information itself, a distance between the position related to the information and the predicted location is an example of factors determining the magnitude of the degree of influence of each piece of information on the environmental indicator. Based on this point, on the display screen illustrated in FIG. 9, a range in which the magnitude of the degree of influence on the prediction range is equal to or larger than a predetermined threshold is displayed on the map.

When specifying the position information as a geographical absolute position, the environment prediction system 100 can specify the position information according to various geodetic systems, such as World Geodetic System 1984 (WGS 84), Parameters of the Earth 1990 (PE90.11), or International Terrestrial Reference Frame 2008 (ITRF 2008). The environment prediction system 100 can also specify the position information according to another geographic coordinate system or projection coordinate system, such as a Universal Transverse Mercator (UTM) coordinate system.

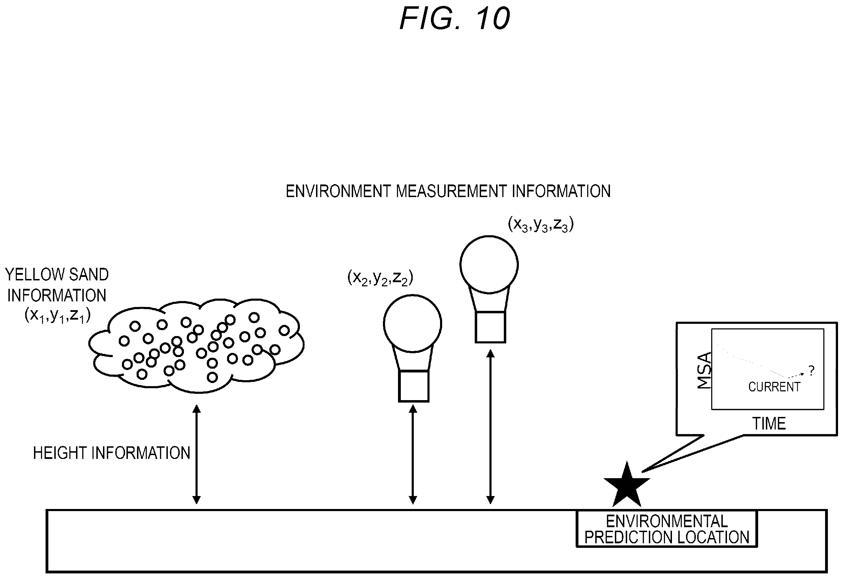

In the environment prediction processing, the control unit of the environment prediction system 100 can also predict an influence of a spatial event by using three-dimensional information including the position information as a position in a height direction as illustrated in FIG. 10. In this case, the environment prediction system 100 can use information including a measurement value measured in the sky and a value of a measurement altitude as the input information in addition to the input information obtained on the ground. In this case, for example, the environment prediction system 100 can perform the environment prediction in consideration of a phenomenon affected by the airflow.

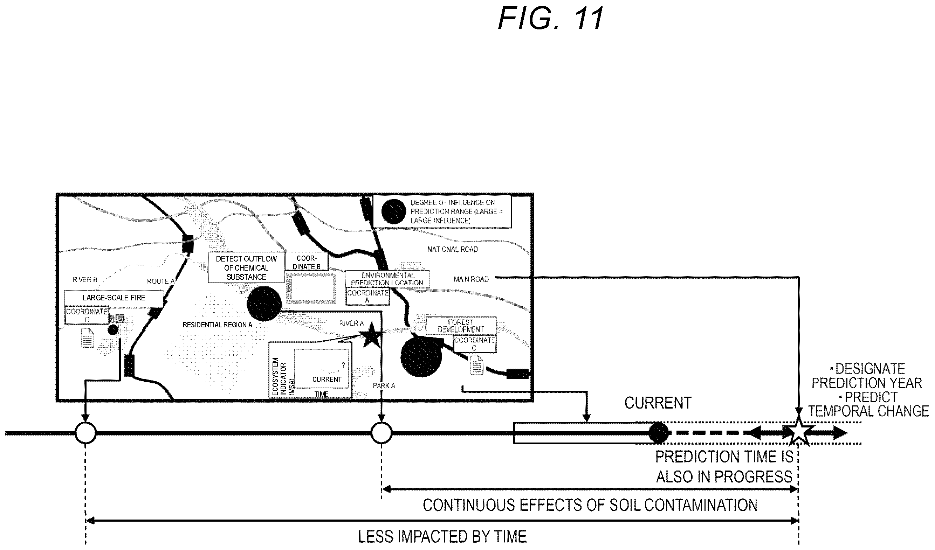

In the environment prediction processing, as illustrated in FIG. 11, the control unit of the environment prediction system 100 can add time information to the position information to obtain three-dimensional or four-dimensional information indicating a temporal position, and can support designation of a prediction year, prediction of a temporal change, and the like. In this case, the environment prediction system 100 can perform the environment prediction in consideration of ongoing problems and problems that have little temporal impact. In this case, since the environment prediction system 100 can consider the temporal distance, the environment prediction system 100 can perform, for example, the environment prediction in which the prediction year is designated or the environment prediction including the temporal change.

In the environment prediction processing, as described above, the control unit of the environment prediction system 100 can also receive the input operation for designating a future scenario from the user via the input interface screen illustrated in FIGS. 6 and 7 and output a future prediction value in the future scenario designated by the user as the output information. In this case, the user of the environment prediction system 100 can designate not only a specific scenario such as a numerical value but also an abstract scenario such as a sentence via the prediction scenario input interface screen illustrated in FIG. 7.

The environment prediction system 100 according to Embodiment 1 has been described above.

### Embodiment 2

Next, the environment prediction system 100 according to Embodiment 2 will be described focusing on differences from the environment prediction system 100 according to Embodiment 1.

FIG. 12 is a diagram illustrating an example of a configuration of an environmental indicator prediction model 300B according to Embodiment 2.

The environment prediction system 100 according to Embodiment 2 executes environment prediction processing using the environmental indicator prediction model 300B illustrated in FIG. 12.

In the environmental indicator prediction model 300B illustrated in FIG. 12, a diffusion model is used to output an image indicating an environmental indicator. The environment prediction system 100 according to Embodiment 2 can use the diffusion model to generate a map image to output map information in consideration of a relative positional relationship and geographical connectivity caused by a river, a railway, or the like.

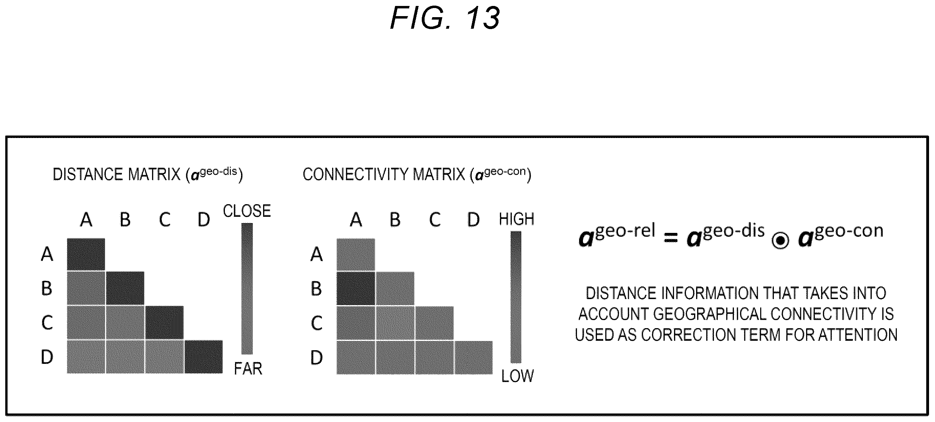

In this case, when generating an attention matrix in information integration processing, the control unit of the environment prediction system 100 generates distance information in consideration of the geographical connectivity that is added based on a distance matrix (each relative distance) and a connectivity matrix (geographical connectivity) as a correction term of attention in the manner illustrated in FIG. 13, and generates an integrated embedded expression by multiplying the correction term. Accordingly, the prediction accuracy can be improved. At this time, an encoded position embedded expression is an embedded expression including geographical information, and is integrated with the corresponding information through matrix calculation.

The environment prediction system 100 according to Embodiment 2 can generate the correction term of attention in this manner and use the correction term as the input information embedded expression, thereby predicting a degree of influence on the environment in consideration of the geographical connectivity, that is, the relative positional relationship.

Examples of a method for representing the relative positional relationship include a method for using coordinates when a prediction location is set as an origin (0,0) in an orthogonal coordinate system, and a method for using a direction and a distance in a polar coordinate system.

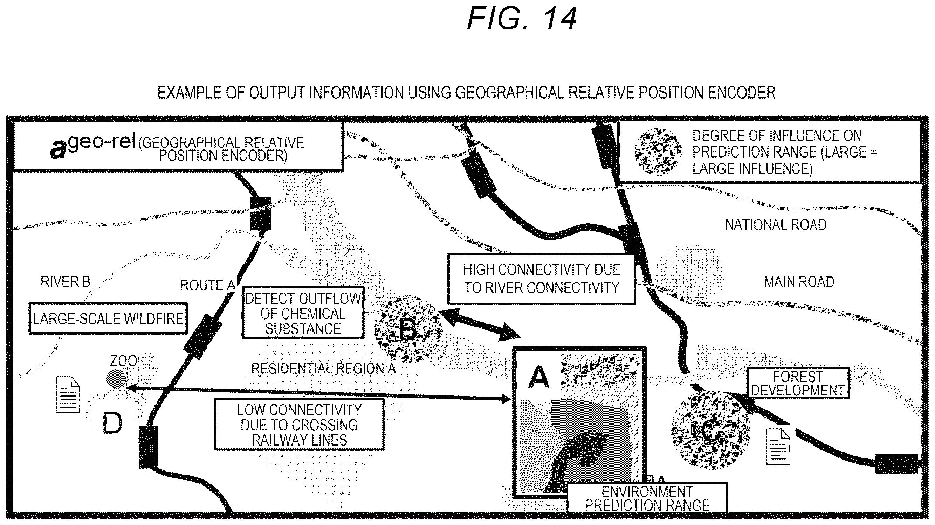

FIG. 14 is a diagram illustrating an example of an output interface screen on which output information is displayed when a geographical relative position encoder is used.

As described above, the environment prediction system 100 according to Embodiment 2 can perform environment prediction by using geographical information including not only position information but also information indicating geographical connectivity. As a result, the prediction accuracy can be improved as compared with a case where the environment prediction is performed simply using the position information or a case where the environment prediction is performed using information obtained by adding the distance information to the position information.

In the environment prediction system 100 according to Embodiment 2, not only numerical information but also image information such as a heat map image can be used as the environmental indicator.

The environment prediction system 100 according to Embodiment 2 has been described above.

The embodiments of the invention described above are summarized as follows.
(1) The environment prediction system 100 for predicting an environmental indicator in a predetermined position and/or region includes: the information input unit 10 configured to acquire, as input information, at least two or more types of information from among image information, numerical information, or text information each including geographical position information; the information estimation unit 30 including at least the position information acquisition unit 31 configured to separate or estimate the position information from the input information, the position information processing unit 32 configured to encode the separated or estimated position information and generate a plurality of position information embedded expressions, the input information encoding unit 33 configured to encode the acquired input information for each piece of information and generate a plurality of input information embedded expressions, and the information integration processing unit 34 configured to embed the position information embedded expressions into the plurality of input information embedded expressions respectively to generate a plurality of integrated embedded expressions, the information estimation unit 30 configured to predict the environmental indicator in the predetermined position and/or region by inputting the plurality of integrated embedded expressions to a trained environmental indicator prediction model (300A, 300B); and the information output unit 60 configured to output the predicted environmental indicator. As a result, the environment prediction system 100 can predict an environmental indicator in consideration of a magnitude of a degree of influence based on a positional relationship between pieces of information when performing future prediction of a target environment based on multimodal information generated by machine learning.
(2) The input information embedded expression is a vector expression.
(3) The position information embedded expression is a vector or matrix expression.
(4) The input information includes at least any one of published observation information, individually input measurement information, and information obtained as a result of simulation.
(5) The position information embedded expression includes at least any one of map information and topographical information.
(6) The position information embedded expression is an embedding vector including height information and/or time information.
(7) Included is at least any one of an input screen for designating, by selection and/or input, a location at which an environmental indicator is to be predicted; and an output screen for outputting a prediction result of the environmental indicator of a position and/or region including the location.
(8) A selection operation and/or an input operation is received via the input screen, the selection operation and/or the input operation designating at least any one of a type of a data source from which the input information is acquired, a geographic and/or temporal range within which the input information is acquired, and a future prediction value and/or future prediction information is received.
(9) The position information embedded expression, the input information embedded expression, and the integrated embedded expression are generated by including an embedding including an attention mechanism.
(10) The integrated embedded expression is generated by integration processing including an attention mechanism.

The invention is not limited to the embodiments described above and can be implemented using any component without departing from the gist of the invention.

The embodiments and modifications described above are merely examples, and the invention is not limited to the contents thereof as long as the characteristics of the invention are not impaired. Although various embodiments and modifications have been described above, the invention is not limited to the contents thereof. Other aspects conceivable within the scope of the technical idea of the invention are also included within the scope of the invention.

In the drawings described above, control lines and information lines that are considered necessary for description are illustrated, and not all the control lines and information lines on implementation are necessarily illustrated. For example, it may be considered that almost all configurations are actually interconnected.

A disposition form of the functional units of the environment prediction system 100 described above is merely an example. The disposition form of the functional units can be changed to an optimal disposition form from a viewpoint of performance, processing efficiency, communication efficiency, and the like of hardware and software included in the environment prediction system 100.

## Claims

1. An environment prediction system for predicting an environmental indicator in a predetermined position and/or region, the environment prediction system comprising:
an information input unit configured to acquire, as input information, at least two or more types of information from among image information, numerical information, or text information each including geographical position information;
an information estimation unit including at least
a position information acquisition unit configured to separate or estimate the position information from the input information,
a position information processing unit configured to encode the separated or estimated position information and generate a plurality of position information embedded expressions,
an input information encoding unit configured to encode the acquired input information for each piece of information and generate a plurality of input information embedded expressions, and
an information integration processing unit configured to embed the position information embedded expressions into the plurality of input information embedded expressions respectively to generate a plurality of integrated embedded expressions,
the information estimation unit configured to predict the environmental indicator in the predetermined position and/or region by inputting the plurality of integrated embedded expressions to a trained environmental indicator prediction model; and
an information output unit configured to output the predicted environmental indicator.

2. The environment prediction system according to claim 1, wherein
the input information embedded expression is a vector expression.

3. The environment prediction system according to at least one of the previous claims, wherein
the position information embedded expression is a vector or matrix expression.

4. The environment prediction system according to at least one of the previous claims, wherein
the input information includes at least any one of
published observation information,
individually input measurement information, and
information obtained as a result of simulation.

5. The environment prediction system according to at least one of the previous claims, wherein
the position information embedded expression includes at least any one of map information and topographical information.

6. The environment prediction system according to at least one of the previous claims, wherein
the position information embedded expression is an embedding vector including height information and/or time information.

7. The environment prediction system according to at least one of the previous claims, further comprising:
at least any one of
an input screen for designating, by selection and/or input, a location at which an environmental indicator is to be predicted; and
an output screen for outputting a prediction result of the environmental indicator of a position and/or region including the location.

8. The environment prediction system according to claim 7, wherein
a selection operation and/or an input operation is received via the input screen, the selection operation and/or the input operation designating at least any one of
a type of a data source from which the input information is acquired,
a geographic and/or temporal range within which the input information is acquired, and
a future prediction value and/or future prediction information is received.

9. The environment prediction system according to at least one of the previous claims, wherein
the position information embedded expression, the input information embedded expression, and the integrated embedded expression are generated by including an embedding including an attention mechanism.

10. The environment prediction system according to at least one of the previous claims, wherein
the integrated embedded expression is generated by integration processing including an attention mechanism.

11. An environment prediction method for predicting an environmental indicator in a predetermined position and/or region, the environment prediction method comprising:
by a computer including at least a processor and a storage device,
acquiring, as input information, at least two or more types of information from among image information, numerical information, and text information each including geographical position information;
separating or estimating the position information from the input information;
encoding the separated or estimated position information and generating a plurality of position information embedded expressions;
encoding the acquired input information for each piece of information and generating a plurality of input information embedded expressions;
embedding the position information embedded expressions into the plurality of input information embedded expressions respectively to generate a plurality of integrated embedded expressions;
predicting the environmental indicator in the predetermined position and/or region by inputting the plurality of integrated embedded expressions to a trained environmental indicator prediction model; and
outputting the predicted environmental indicator.
